# EUROPEAN PATENT APPLICATION

(11) **EP 3 185 199 A1**
(43) Date of publication of application: **28.06.2017**
(21) Application number: 16205367.2
(22) Date of filing: 20.12.2016
(51) Int. Cl.: G06Q 30/06

(54) **REGISTER SYSTEM CONFIGURED TO AUTOMATICALLY GENERATE NOTIFICATIONS REGARDING PRODUCT REGISTRATIONS**

(30) Priority: 24.12.2015 JP 2015251366
(71) Applicant: Toshiba TEC Kabushiki Kaisha, Tokyo 141-0032 (JP)
(72) Inventor: GOTANDA, Tsuyoshi, Shinagawa-ku, Tokyo 141-8562 (JP); SUSAKI, Akiko, Shinagawa-ku, Tokyo 141-8562 (JP); NAKAJIMA, Takashi, Shinagawa-ku, Tokyo 141-8562 (JP)
(74) Representative: Takeuchi, Maya

(57) **Abstract**

A register system includes a first reader configured to optically read a code, a second reader configured to magnetically or electronically read user data from a medium carried by a user, an operation key that is activated to complete product registration, and a processor. The processor is configured to register products as codes on the products are optically read by the first reader and, as the products are being registered, determine whether or not a condition for completing product registration is satisfied using data about the products that have been registered and the user data read by the second reader, and if the condition is not satisfied at any time prior to activation of the operation key, generate a notification about the condition not being satisfied.

## Description

### FIELD

Embodiments described herein relate generally to a register system configured to automatically generate notifications regarding product registrations.

### BACKGROUND

According to the related art, when merchandise is purchased, a merchandise registration apparatus notifies a shopper of a total amount and thereafter, a payment method is determined. When paying is made by a payment method with a cap amount, such as an electronic money card and a debit card, if the balance of the electronic money is less than the total amount, a shopper may need to pay for the balance due by the other payment method such as cash or the like. According to such a merchandise registration apparatus, the shopper may not able to know that the cap amount is less than the total amount until all merchandise to be purchased is registered and the payment method is designated. Since the shopper needs to prepare for the payment by the other payment method for the balance due after all merchandise to be purchased is registered, a checkout process for the shopper may take a longer time.

Therefore, it is desirable that the shopper can know a cap amount before the registration of the merchandise is completed.

### DESCRIPTION OF THE DRAWINGS

FIG. 1 is a perspective view of a merchandise registration apparatus according to an embodiment.
FIG. 2 is a block diagram of the merchandise registration apparatus.
FIG. 3 is a flowchart of control processing executed by a CPU of the merchandise registration apparatus illustrated in FIG. 2.
FIG. 4 illustrates an example of a screen displayed on a touch panel of the merchandise registration apparatus shown in FIG. 1 and FIG. 2.
FIG. 5 illustrates another example of a screen displayed on the touch panel.
FIG. 6 illustrates an example of a screen displayed on a customer-side display device of the merchandise registration apparatus shown in FIG. 1 and FIG.2.

### DETAILED DESCRIPTION

An embodiment provides a merchandise registration apparatus and a program which can alert a shopper that a cap amount of a payment method is less than a total amount.

In general, according to an embodiment, a register system includes a first reader configured to optically read a code, a second reader configured to magnetically or electronically read user data from a medium carried by a user, an operation key that is activated to complete product registration, and a processor. The processor is configured to register products as codes on the products are optically read by the first reader and, as the products are being registered, determine whether or not a condition for completing product registration is satisfied using data about the products that have been registered and the user data read by the second reader, and if the condition is not satisfied at any time prior to activation of the operation key, generate a notification about the condition not being satisfied.

The register system may further comprise a touch panel screen on which the notification is displayed.

Preferably, the notification includes a cancellation key that is activated to cause the second reader to magnetically or electronically read different user data from another medium carried by the user.

Preferably, the cancellation key is included as a selectable object displayed on the touch panel screen.

Preferably, the user data is associated with an electronic payment source of the user and data about the products include prices of the products, and the notification is generated when funds available in the electronic payment source of the user is less than a total price of all the registered products.

The register system may further comprise a network interface, wherein responsive to reading of the user data from the medium by the second reader, the processor sends a request for the funds available through the network interface, and obtains the funds available that is returned in response to the request, through the network interface.

Preferably, upon activation of the operation key, payment processing is carried out using the electronic payment source of the user.

Preferably, the notification is overlaid on the touch panel screen including details of the registered products.

Preferably, the notification is an audio notification.

Preferably, the operation key is included as a selectable object displayed on a touch panel screen.

Preferably, the operation key is included in a physical key panel.

The present invention also relates to a method for processing product registration, comprising: magnetically or electronically reading user data from a medium carried by a user; optically reading codes of products and registering the products as the codes are optically read; as the products are being registered, determining whether or not a condition for completing product registration is satisfied using data about the products that have been registered and the user data; and if the condition is not satisfied at any time prior to activation an the operation key to complete product registration, generating a notification about the condition not being satisfied.

Preferably, the notification is overlaid on the touch panel screen including details of the registered products.

Preferably, the notification is an audio notification.

Preferably, the user data is associated with an electronic payment source of the user and data about the products include prices of the products, and the notification is generated when funds available in the electronic payment source of the user is less than a total price of all the registered products.

The present invention further relates to a non-transitory computer readable medium comprising a program that is executable in a register system according to any one of claims 1 to 11 to cause the register system to perform a method for processing product registration, the method comprising: magnetically or electronically reading user data from a medium carried by a user;optically reading codes of products and registering the products as the codes are optically read; as the products are being registered, determining whether or not a condition for completing product registration is satisfied using data about the products that have been registered and the user data; and if the condition is not satisfied at any time prior to activation an the operation key to complete product registration, generating a notification about the condition not being satisfied.

Preferably, the notification is overlaid on the touch panel screen including details of the registered products.

Preferably, the notification is an audio notification.

Preferably, the user data is associated with an electronic payment source of the user and data about the products include prices of the products, and the notification is generated when funds available in the electronic payment source of the user is less than a total price of all the registered products.

Hereinafter, a merchandise registration apparatus according to an embodiment will be described, as non-limiting examples, with reference to the drawings. The same symbols or reference numerals will be used for the same elements in the following drawings and description thereof.

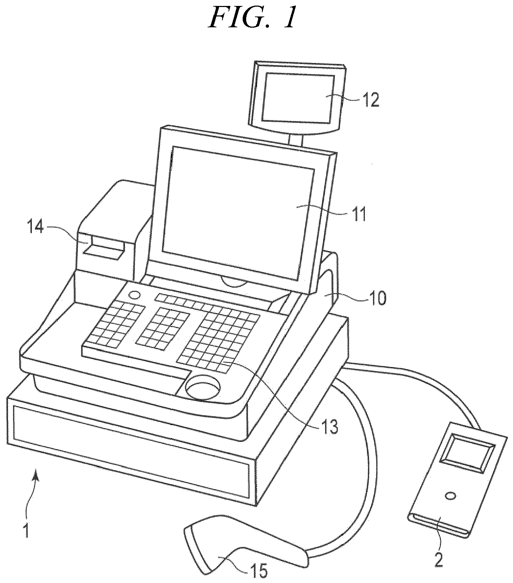

FIG. 1 is a perspective view of a merchandise registration apparatus 1 according to an embodiment.

The merchandise registration apparatus 1 is connected to a reader/writer 2.

The merchandise registration apparatus 1 performs various types of data processing related to merchandise sales, such as registration of merchandise to be purchased and calculation of a payment amount. For example, a point of sales (POS) terminal, an electronic cash register (ECR), or the like can be used as the merchandise registration apparatus 1. The merchandise registration apparatus 1 includes a main body 10, a touch panel 11, a customer-side display device 12, an input device 13, a printer 14, and a scanner 15.

The main body 10 includes various elements which configure the merchandise registration apparatus 1 and will be described below.

The touch panel 11 functions as a display device which displays a screen for notifying an operator of various kinds of information. In addition, the touch panel 11 functions as an input device on which the operator performs a touch operation.

The customer-side display device 12 displays various kinds of information for a shopper.

The input device 13 receives various kinds of information according to an operation of an operator. A keyboard, a keypad, buttons, or the like can be used as the input device 13.

The printer 14 prints a receipt or the like. The printer 14 can use various types of printers, such as, a dot impact printer, an inkjet printer, a thermal printer, a laser printer, or other printers.

The scanner 15 reads barcodes on merchandise, and outputs merchandise codes that the barcodes indicate. In FIG. 1, the scanner 15 is used by hand, but may be fixed to a cash register table.

The reader/writer 2 reads information recorded on a card or the like as a payment method with a cap amount for a transaction, such as, a debit card, an electronic money card, or a point card. In addition, the reader/writer 2 can write information in the card or the like.

Hereinafter, the payment method with the cap amount will be described.

As to the debit card, bank account balance or the like may correspond to the cap amount. Alternatively, if a debit card user or a service provider of the debit card sets an upper limit that can be spent on a single transaction or a certain payment period (e.g., a day or a month), a smaller of the account balance and the upper limit corresponds to the cap amount.

As to the electronic money card, an electronic money balance corresponds to the cap amount.

As to the point card, a value of a point balance corresponds to the cap amount.

The payment amount limit is recorded in at least one of a server, a card (payment medium), or the like.

The payment medium may be any one of a magnetic card, a contact type integrated circuit (IC) card, or a non-contact IC card. In addition, the medium is not limited to the card type medium, and a non-contact IC chip mounted in a portable electronic device such as a smart phone or a mobile phone may be used as the medium.

The reader/writer 2 illustrated in FIG. 1 reads or writes information from or to a non-contact IC card or a non-contact IC chip. The reader/writer 2 can also read or write information from or to a magnetic card, a contact type IC card, or the like. That is, a type of reader/writer which reads or writes information from or to a medium that stores information related to payment is used as the reader/writer 2.

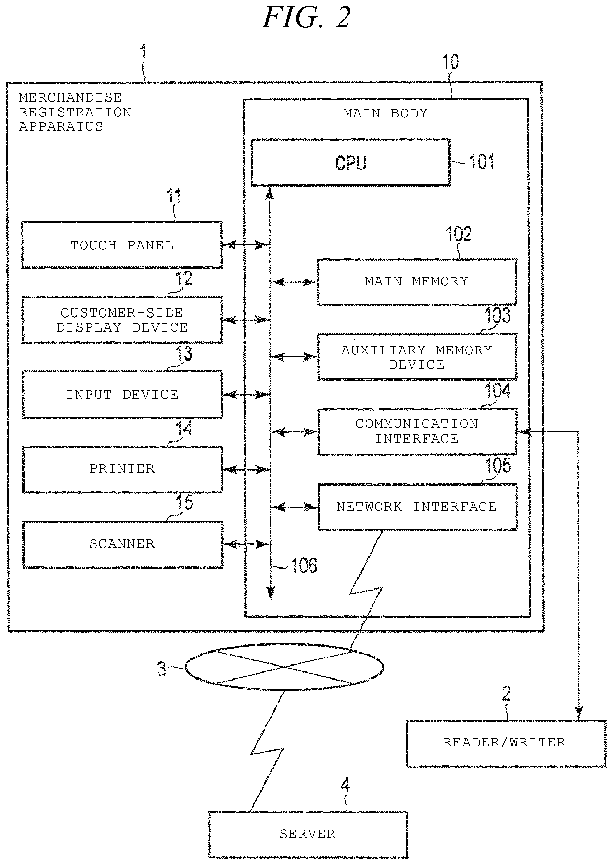

FIG. 2 is a block diagram of the merchandise registration apparatus 1.

The main body 10 includes a central processing unit (CPU) 101, a main memory 102, an auxiliary memory device 103, a communication interface 104, a network interface 105, and a bus 106.

The CPU 101 corresponds to a nerve center of a computer which performs processing and control necessary for an operation of the merchandise registration apparatus 1. The CPU 101 controls each unit so as to perform various functions of the merchandise registration apparatus 1, based on programs such as an operating system, application software, and the like which are stored in the main memory 102. Furthermore, the CPU 101 can also control the reader/writer 2 through the communication interface 104.

The main memory 102 serves as main memory of the computer. The main memory 102 stores programs such as the operating system, the application software, and the like. The main memory 102 stores data which is referred to by the CPU 101 while the CPU 101 performs various kinds of processing. Furthermore, the main memory 102 is used as a work area for storing data which is temporarily used by the CPU 101 while performing various kinds of processing.

The auxiliary memory device 103 serves as auxiliary memory of the computer. The auxiliary memory device 103 is, for example, an electric erasable programmable read-only memory (EEPROM), a hard disc drive (HDD), a solid state drive (SSD), or the like. The auxiliary memory device 103 stores data used by the CPU 101 while performing various kinds of processing, the data generated by processing of the CPU 101, or the like. The auxiliary memory device 103 can also store programs such as the operating system, the application software, and the like.

In addition, the main memory 102 or the auxiliary memory device 103 also stores a merchandise list which is a list of merchandise registered as purchased merchandise.

The program stored in the main memory 102 or the auxiliary memory device 103 includes a control program that is described so as to carry out control processing which will be described below. As an example, the merchandise registration apparatus 1 is provided to a user, in a state where the control program is stored in the main memory 102 or the auxiliary memory device 103. Alternatively, the merchandise registration apparatus 1 may be provided the user, in a state where the control program is not stored in the main memory 102 or the auxiliary memory device 103. In that case, the control program is separately provided to the user and written in the main memory 102 or the auxiliary memory device 103 according to an operation of the user, a service man, or the like. For the separate transfer, the control program may be recorded in a removable storage medium, such as a magnetic disc, a magneto-optical disc, an optical disc, or a semiconductor memory, or transferring of the control program may be achieved by downloading the program through a network.

The communication interface 104 is an interface by which the merchandise registration apparatus 1 communicates with the reader/writer 2. The communication interface 104 uses, for example, RS-232C, a universal serial bus (USB), a small computer system interface (SCSI), IEEE 1394, Ethernet®, or other interface standards.

The network interface 105 is an interface by which the merchandise registration apparatus 1 communicates with other units through a network 3.

The bus 106 includes an address, a data bus, or the like, and is a transfer path through which each unit of the merchandise registration apparatus 1 transmits or receives signals.

The network 3 is a communication network which includes a mobile telephone network such as third generation (3G) or long term evolution (LTE), Internet, a local area network (LAN), a dedicated line, or other communication lines, or the like.

A server 4 is connected to the merchandise registration apparatus 1 through the network 3. The server 4 can store account balance of the payment medium, the cap amount, or the like. A server having a known configuration can be used as the server 4.

Hereinafter, an operation of the merchandise registration apparatus 1 which is performed when a shopper purchases merchandise will be described with reference to the drawings. Content of processing which will be described below is an example, and various kinds of processing which can lead to the same results can be appropriately performed.

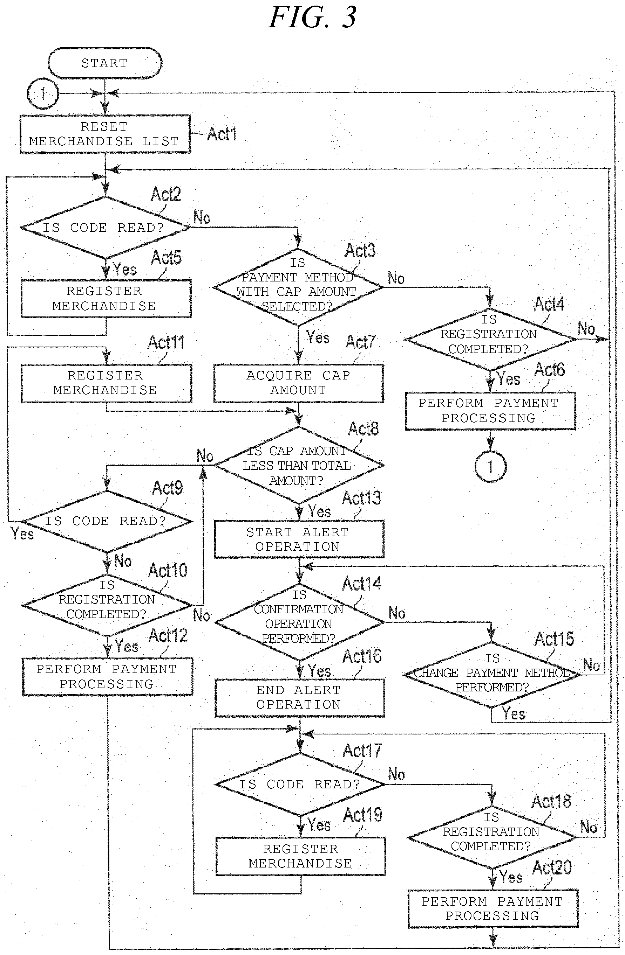

FIG. 3 is a flowchart of control processing executed by the CPU 101. The CPU 101 executes the control processing, based on a control program stored in the main memory 102 or the auxiliary memory device 103.

In Act 1, the CPU 101 resets a merchandise list stored in the main memory 102 or the auxiliary memory device 103. That is, the CPU 101 commands the main memory 102 or the auxiliary memory device 103 to clear the merchandise list so that no merchandise is registered therein.

In Act 2, the CPU 101 determines whether or not a merchandise code is read. That is, the CPU 101 determines whether or not a barcode attached to the merchandise is read by the scanner 15. If the merchandise code is not read, the CPU 101 determines that the answer is No in Act 2, and the process proceeds to Act 3.

In Act 3, the CPU 101 determines whether or not a payment method with a cap amount is used for payment. That is, the CPU 101 determines whether or not a card or the like with the cap amount is read by the reader/writer 2 for the payment. If it is determined that the payment method with the cap amount is not used for the payment, the CPU 101 determines that the answer is No in Act 3, and the process proceeds to Act 4.

In Act 4, the CPU 101 determines whether or not an operation of completing merchandise registration is performed. That is, the CPU 101 determines whether or not a predetermined operation for completing the merchandise registration such as pressing of a subtotal button or the like is performed. The operation to complete the merchandise registration is supposed to be carried out after one or more units of merchandise are registered. The operation of the CPU 101 when the operation of completing the merchandise registration is performed without registration of any merchandise may be determined in advance. For example, the CPU 101 may ignore the operation of completing the merchandise registration. Alternatively, the CPU 101 may disable the operation of completing the merchandise registration, if no merchandise is registered. If the operation of completing the merchandise registration is not performed, the CPU 101 determines that the answer is No in Act 4, and returns to Act 2. That is, the CPU 101 determines whether the merchandise code is read or the payment method with the cap amount is used for the payment, or repeats Act 2 to Act 4 until the operation of completing the merchandise registration is performed.

If the merchandise code is read by the scanner 15 when the CPU 101 is in a standby state of Act 2 to Act 4, the CPU 101 determines that the answer is Yes in Act 2, and the process proceeds to Act 5.

In Act 5, the CPU 101 registers the read merchandise code in the merchandise list. That is, the CPU 101 commands the main memory 102 or the auxiliary memory device 103 to add the read merchandise code to the merchandise list. In this processing, the CPU 101 operates as a registration unit.

In addition, in Act 5, the CPU 101 displays a list of merchandise registered in the merchandise list on the touch panel 11. That is, the CPU 101 generates an image corresponding to a merchandise registration screen 200, and commands the touch panel 11 to display the image.

When the merchandise code is registered in the merchandise list while the merchandise registration screen 200 is being displayed on the touch panel 11, the merchandise registration screen 200 is updated to a display according to the merchandise list in which the merchandise code is registered. That is, the CPU 101 generates an image corresponding to the updated merchandise registration screen 200, and commands the touch panel 11 to display the image.

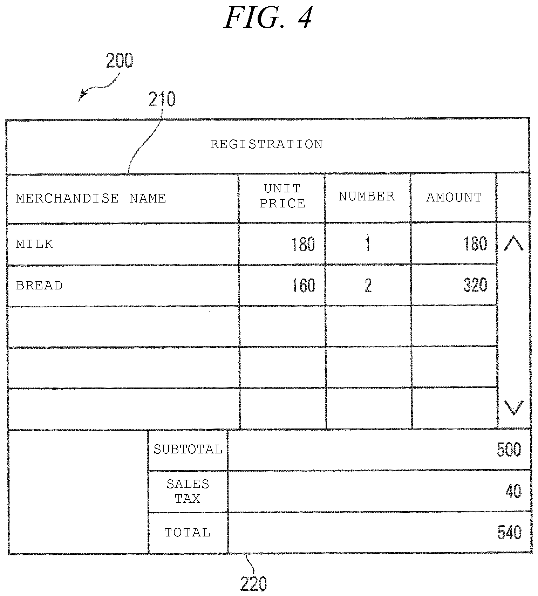

FIG. 4 illustrates an example of the merchandise registration screen 200.

The merchandise registration screen 200 illustrated in FIG. 4 includes a merchandise region 210 and a money amount region 220.

The merchandise region 210 displays merchandise names, unit prices, numbers, and price for each piece of merchandise registered in the merchandise list. The merchandise region 210 may also display information on whether price of each piece of the merchandise includes tax or excludes tax, a merchandise code, or other merchandise.

The money amount region 220 displays subtotal amounts, sales tax amounts, and total amounts of all merchandise registered in the merchandise list. Here, the subtotal amount is a total amount of all merchandise registered in the merchandise list. In addition, the sales tax amount is a total of sales tax amount of all merchandise which has been already registered in the merchandise list. The total amount corresponds to a payment amount for the merchandise registered in the merchandise list.

Then, the CPU 101 returns to the standby state of Act 2 to Act 4, after ending processing of Act 5.

That is, the CPU 101 registers the merchandise code in the merchandise list each time the merchandise code is read, until the payment method is determined or the operation of completing the registration is performed.

If the operation of completing the merchandise registration is performed in a state where one or more merchandise are registered when the CPU 101 is in the standby state of Act 2 to Act 4, the CPU 101 determines that the answer is Yes in Act 4, and the process proceeds to Act 6.

In Act 6, the CPU 101 sets a shopper as a payer, and performs payment processing for the merchandise registered in the merchandise list. Here, a known processing can be used for the payment processing, description of the payment processing will be omitted.

In addition, in Act 6, the CPU 101 performs issue of a receipt or the like. That is, the CPU 101 commands the printer 14 to issue the receipt or the like.

The process returns to Act 1 after the CPU 101 ends the processing of Act 6.

If use of the payment method with the cap amount is determined for the payment when the CPU 101 is in the standby state of Act 2 to Act 4, the CPU 101 determines that the answer is Yes in Act 3, and the process proceeds to Act 7.

In Act 7, the CPU 101 acquires the cap amount the payment method. That is, if the cap amount of the payment method is acquired from the server 4, the CPU 101 commands the network interface 105 to transmit a request to the server 4 so that the server 4 transmits the cap amount in return. In addition, the CPU 101 commands the network interface 105 to receive the cap amount transmitted from the server 4. The CPU 101 operates as an acquisition unit in this processing. In addition, if the cap amount of the payment method is acquired from a card or the like for the payment method, the CPU 101 commands the reader/writer 2 to acquire the cap amount from the card or the like. The CPU 101 operates as an acquisition unit in this processing.

In Act 8, the CPU 101 determines whether or not the cap amount is short of total amount. That is, the CPU 101 calculates the total amount from the price of the merchandise registered in the merchandise list, and compares the calculated total amount with the cap amount acquired in Act 7. Then, the CPU 101 determines whether or not the cap amount is greater than the total amount, that is, whether or not the cap amount is less than the total amount. If the cap amount is greater than or equal to the total amount, the CPU 101 determines that the answer is No in Act 8, and the process proceeds to Act 9.

In Act 9, the CPU 101 determines whether or not the merchandise code is read. That is, the CPU 101 determines whether or not the barcode attached to the merchandise is read, in the same manner as in Act 2. If the merchandise code is not read, the CPU 101 determines that the answer is No in Act 9, and the process proceeds to Act 10.

In Act 10, the CPU 101 determines whether or not an operation of completing the merchandise registration is performed. That is, the CPU 101 determines whether or not the operation of completing the merchandise registration is performed, in the same manner as in Act 4. If the operation of completing the merchandise registration is not performed, the CPU 101 determines that the answer is No in Act 10, and the process returns to Act 9. That is, the CPU 101 repeats Act 9 and Act 10 until the merchandise code is read or the operation of completing the merchandise registration is performed.

If the merchandise code is read when the CPU 101 is in the standby state of Act 9 and Act 10, the CPU 101 determines that the answer is Yes in Act 9, and the process proceeds to Act 11.

In Act 11, the CPU 101 registers the read merchandise code. That is, the CPU 101 adds the read merchandise code to the merchandise list, in the same manner as in Act 5. The CPU 101 operates as a registering unit in this processing.

In addition, the CPU 101 displays or updates the merchandise registration screen 200, according to the merchandise list at this point of time, in the same manner as in Act 5.

The process returns to Act 8 after the CPU 101 ends the processing for Act 11. At this time, the CPU 101 calculates the total amount anew, based on the merchandise list which is updated in Act 11, and compares the total amount with the cap amount.

That is, the CPU 101 registers the merchandise code in the merchandise list each time the merchandise code is read, until the total amount exceeds the cap amount or the operation of completing the merchandise registration is performed.

On the other hand, if the operation of completing the merchandise registration is performed in a state where one or more merchandise are registered when the CPU 101 is in the standby state of Act 9 and Act 10, the CPU 101 determines that the answer is Yes in Act 10, and the process proceeds to Act 12.

In Act 12, the CPU 101 performs payment processing for the merchandise registered in the merchandise list. Here, the CPU 101 performs the payment processing using the payment method which is determined in Act 3. A known method can be used for a specific payment processing, and description thereof will be omitted.

In addition, in Act 12, the CPU 101 performs issue of a receipt or the like. That is, the CPU 101 commands the printer 14 to issue the receipt or the like.

Then, the process returns to Act 1 after the CPU 101 ends the processing of Act 12.

If the cap amount is less than the total amount, the CPU 101 determines that the answer is Yes in Act 8, and the process proceeds to Act 13.

In Act 13, the CPU 101 starts an alert operation for alerting a shopper that the cap amount is less than the total amount. For that purpose, the CPU 101 generates an image corresponding to a first notification screen, and commands the touch panel 11 to display the image. By performing the processing, a function as a first display unit is performed by cooperation of the CPU 101 and the touch panel 11. Furthermore, the CPU 101 commands the customer-side display device 12 to display a second alert screen 300. By performing this processing, a function as a second display unit is performed by cooperation of the CPU 101 and the customer-side display device 12.

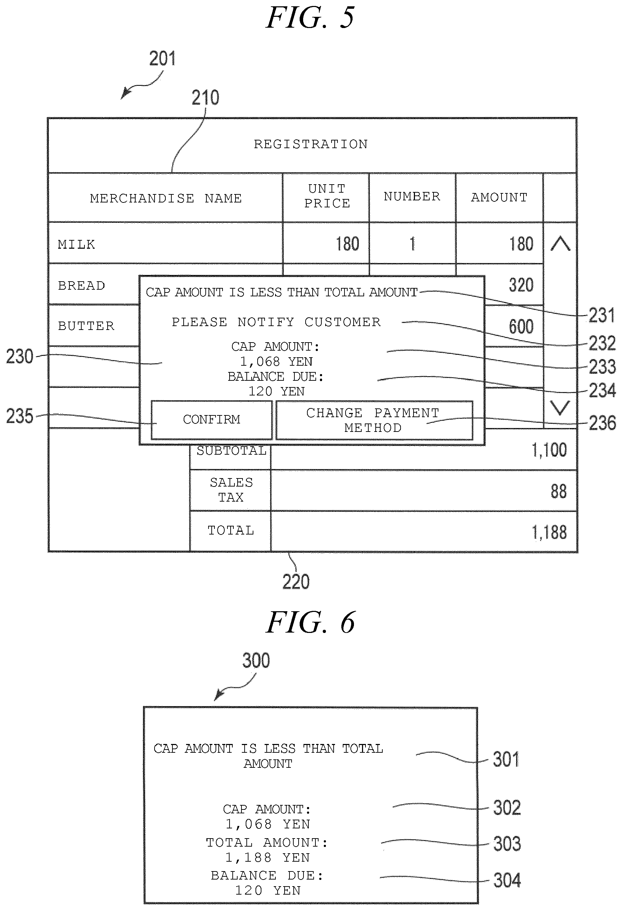

FIG. 5 illustrates an example of a first alert screen 201.

The first alert screen 201 illustrated in FIG. 5 includes the merchandise registration screen 200, the merchandise region 210, and the money amount region 220. Furthermore, the first alert screen 201 includes an alert region 230 which is arranged to be overlaid on the merchandise region 210 and the money amount region 220.

The alert region 230 includes a shortage notification 231, an alert message 232, a cap amount 233, a balance due 234, a confirmation object 235, and a change object 236.

The shortage notification 231 is a character string for notifying an operator that the cap amount is less than the total amount. For example, the shortage notification 231 includes "cap amount is exceeded."

The notification message 232 is a character string for instructing the operator to tell a shopper that the cap amount is less than the total amount. For example, the notification message 232 includes "please notify the customer."

The cap amount 233 displays a cap amount of a payment method. In FIG. 5, the cap amount limit is set to 1,068 yen.

The balance due 234 displays how much the cap amount is less the total amount. FIG. 5 illustrates a case where the balance due is 120 yen.

The confirmation object 235 is an object to be selected by the operator, when the operator confirms content displayed in the alert region 230.

The change object 236 is an object to be selected by the operator to cancel the payment method set for the payment and change the payment method to another payment method.

The operator is urged by displaying of the alert region 230 described above, to alert the shopper that the cap amount is less than the total amount. That is, the alert region 230 is directly displayed to the operator, but the shopper is notified of the shortage indirectly from the operator. That is, display of the alert region 230 is an example of an alerting operation of alerting the shopper that the cap amount is less than the total amount.

FIG. 6 illustrates an example of the second alert screen 300.

The second alert screen 300 illustrated in FIG. 6 includes a shortage alert 301, a cap amount 302, a total amount 303, and a balance due 304.

The shortage alert 301, the cap amount 302, and the balance due 304 include the same contents as the shortage notification 231, the cap amount 233, and the balance due 234.

The total amount 303 indicates a total amount of the merchandise registered in the merchandise list at this point of time. FIG. 6 illustrates a case where the total amount is 1,188 yen.

In processing of Act 8 and Act 13, the CPU 101, the touch panel 11, and the customer-side display device 12 operate as an alert unit. In addition, the CPU 101 operates as an alert control unit. In addition, the touch panel 11 and the customer-side display device 12 operate as an alert device.

In Act 14, the CPU 101 determines whether or not a predetermined operation of indicating that the alert operation is confirmed is performed. If the confirmation object 235 is not operated, the CPU 101 determines that the answer is No in Act 14, and the process proceeds to Act 15.

In Act 15, the CPU 101 determines whether or not a predetermined operation of cancelling payment by the selected payment method and changing the payment method to another payment method is performed. If the change object 236 is not operated, the CPU 101 determines that the answer is No in Act 15, and the process returns to Act 14.

That is, the CPU 101 repeats Act 15 and Act 16 until one of the confirmation object 235 and the change object 236 is operated.

If the change object 236 is operated when the CPU 101 is in the standby state of Act 14 and Act 15, the CPU 101 determines that the answer is Yes in Act 15, and the process returns to Act 2. At this time, the CPU 101 performs processing of cancelling the payment method selected for the payment and ending the alert operation, and then the process returns to Act 2. In the processing of ending the alert operation herein, the CPU 101 commands the touch panel 11 to end display of the alert region 230, and commands the customer-side display device 12 to end display of the second alert screen 300. In this case, the CPU 101 returns to the standby state of Act 2 to Act 4, and thus, the payment method can be changed to other payment methods, which may have other cap amount in Act 3. In this manner, the CPU 101 operates as a change unit in the processing of Act 15 and Act 3.

If the confirmation object 235 is operated when the CPU 101 is in the standby state of Act 14 and Act 15, the CPU 101 determines that the answer is Yes in Act 14, and the process proceeds to Act 16.

In Act 16, the CPU 101 ends the alert operation. That is, the CPU 101 commands the touch panel 11 to end display of the alert region 230.

In Act 17, the CPU 101 determines whether or not the merchandise code is read, in the same manner as in Act 2. If the merchandise code is not read, the CPU 101 determines that the answer is No in Act 17, and the process proceeds to Act 18.

In Act 18, the CPU 101 determines whether or not an operation of completing the merchandise registration is performed, in the same manner as in Act 4. If the operation of completing the merchandise registration is not performed, the CPU 101 determines that the answer is No in Act 18, and the process returns to Act 17. That is, the CPU 101 repeats Act 17 and Act 18 until the merchandise code is read or the operation of completing the merchandise registration is performed.

If the merchandise code is read when the CPU 101 is in the standby state of Act 17 and Act 18, the CPU 101 determines that the answer is Yes in Act 17, and the process proceeds to Act 19.

In Act 19, the CPU 101 registers the read merchandise code in the same manner as in Act 5. In this processing, the CPU 101 operates as a registering unit. In addition, the CPU 101 updates the merchandise registration screen 200 in the same manner as in Act 5. In addition, the CPU 101 changes display of the amounts in of the second alert screen 300 to the amounts corresponding to the merchandise registered in the merchandise list. That is, the CPU 101 generates an image according to the display, and commands the customer-side display device 12 to display the image.

After the CPU 101 ends the processing of Act 19, the process returns to Act 17.

That, the CPU 101 adds the merchandise code to the merchandise list each time the merchandise code is read, until the operation of completing the merchandise registration is performed.

If the operation of completing the merchandise registration is performed when the CPU 101 is in the standby state of Act 17 and Act 18, the CPU 101 determines that the answer is Yes in Act 18, and the process proceeds to Act 20.

In Act 20, the CPU 101 performs payment processing of the merchandise registered in the merchandise list.

Here, since the cap amount of the payment method determined in Act 3 is less than the total amount, payment processing is performed for the balance due by another payment method.

The balance due can be paid by various payment methods, such as, cash payment, credit payment, debit payment, electronic money payment, and point payment.

In addition, if the payment method determined in Act 3 can raise the cap amount, the CPU 101 may perform the payment in accordance with the raised cap amount. For example, if an electronic money card is used as the payment method, the CPU 101 can raise the cap amount by commanding a reader/writer to add electronic money to electronic money balance.

Since known processing can be employed for the processing of payment and the processing of adding the electronic money to the electronic money balance, description of the processing will be omitted.

In Act 21, the CPU 101 issues a receipt or the like. That is, the CPU 101 commands the printer 14 to issue the receipt or the like.

After the CPU 101 ends the processing of Act 21, the process returns to Act 1.

As described above, the merchandise registration apparatus 1 performs the alert operation of alerting the shopper that the cap amount is less than the total amount, before registration of the merchandise is completed. By the alert operation, the shopper can recognize that the cap amount of the payment method, which is intended to be used, is less than the total amount, before the registration of the merchandise is completed. Accordingly, the shopper can know whether or not the payment method needs to be changed, or can prepare for paying for the balance due, while the rest of the merchandise is registered. In addition, as the result, it is possible to complete payment rapidly after the registration of the merchandise is completed. Here, the preparation for paying for the balance due is to prepare, for example, cash, or the like.

The merchandise registration apparatus 1 performs displaying on the touch panel 11 or the customer-side display device 12, for the alert operation. For that reason, the operator or the shopper can confirm easily and visually that the cap amount is less than the total amount.

If the cap amount of the selected payment method is less than the total amount, the merchandise registration apparatus 1 also changes the payment method according to the operation of the operator. As a result, the shopper can change the payment method to a payment method with a higher cap amount.

Furthermore, the merchandise registration apparatus 1 can also alert how much the cap amount is less than the total amount during the alert operation. Since the shopper can easily recognize the balance due, the shopper can prepare cash or the like for payment of the balance due.

The following modifications can be applied to the above embodiment.

The CPU 101 may determine whether or not the cap amount is less than the total amount after the merchandise code is read and before the merchandise is registered in the merchandise list. In this case, if the cap amount is less than the total amount, which is obtained after adding a unit price of the merchandise corresponding to the merchandise code that is most recently read, to the total amount of merchandise that has been already registered in the merchandise list, alert to that effect is made. As a result, it is possible to make alert before the cap amount becomes less than the total amount.

The CPU 101 may also be able to register the merchandise registered during the alert operation. That is, the CPU 101 performs standby of reading of the merchandise code in a standby state of Act 14 and Act 15, and registers the merchandise in the merchandise list by performing the same processing as in Act 2 and Act 5, if the merchandise code is read by the scanner 15.

The CPU 101 may cancel registered merchandise according to operation of an operator during the alert operation. In addition, the CPU 101 may cancel the registered merchandise according to the operation of the operator during the alert operation, and may register other merchandise instead.

In the aforementioned description, the alert region 230 is arranged to be overlaid on the merchandise region 210 and the money amount region 220, but the arrangement of the alert region 230 is not limited thereto. For example, a part of the merchandise registration screen may be used as the alert region 230. In addition, display of the merchandise registration screen may be terminated and only the alert region 230 may be displayed in the touch panel 11. The CPU 101 generates an image according to the display, and commands the touch panel 11 to display the image.

The CPU 101 may raise the cap amount at arbitrary timing according to a request from a shopper. That is, the CPU 101 may receive a command of raising the cap amount in at least one standby state of the standby states of Act 2 to Act 4, Act 9, Act 10, Act 14, Act 15, Act 17, and Act 18. If the CPU 101 receives the command of raising the cap amount, the CPU 101 raises the cap amount.

The cap amount and the balance due may be displayed when the alert region 230 is displayed, and may be displayed within the merchandise registration screen all the time.

In the aforementioned description, the payment processing is performed by the merchandise registration apparatus 1, but a payment device which is externally attached to the merchandise registration apparatus 1 may perform the payment processing, based on command of the CPU 101. In addition, if the payment device can perform communication through the network 3, the payment device may acquire the cap amount of a payment method from the server 4, based on a command from the CPU 101.

In the aforementioned description, the reader/writer 2 is externally attached to the merchandise registration apparatus 1. The reader/writer 2 is not limited to this configuration, and may be incorporated in the merchandise registration apparatus 1.

The payment processing may be performed by a check-out device of a semi-self method. In this case, information on merchandise registered in a merchandise list, a payment amount, and the like are transmitted to the check-out device, and the check-out device performs payment processing. If the information read by the reader/writer 2 can be transmitted to the check-out device, the information may also be transmitted to the check-out device. If the information is not able to be transmitted, and if writing to a card or the like used for the payment is needed, the check-out device performs reading and writing of information stored in the card or the like.

The merchandise registration apparatus may use a self method. In this case, the operator is a shopper.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A register system comprising:
a first reader configured to optically read a code;
a second reader configured to magnetically or electronically read user data from a medium carried by a user;
an operation key that is activated to complete product registration; and
a processor configured to register products as codes on the products are optically read by the first reader and, as the products are being registered, determine whether or not a condition for completing product registration is satisfied using data about the products that have been registered and the user data read by the second reader, and if the condition is not satisfied at any time prior to activation of the operation key, generate a notification about the condition not being satisfied.

2. The register system according to claim 1, further comprising:
a touch panel screen on which the notification is displayed.

3. The register system according to claim 2, wherein the notification includes a cancellation key that is activated to cause the second reader to magnetically or electronically read different user data from another medium carried by the user.

4. The register system according to claim 3, wherein
the cancellation key is included as a selectable object displayed on the touch panel screen.

5. The register system according to any one of claims 1 to 4, wherein
the user data is associated with an electronic payment source of the user and data about the products include prices of the products, and the notification is generated when funds available in the electronic payment source of the user is less than a total price of all the registered products.

6. The register system according to claim 5, further comprising:
a network interface, wherein
responsive to reading of the user data from the medium by the second reader, the processor sends a request for the funds available through the network interface, and obtains the funds available that is returned in response to the request, through the network interface.

7. The register system according to claim 5 or 6, wherein
upon activation of the operation key, payment processing is carried out using the electronic payment source of the user.

8. The register system according to any one of claims 1 to 7, wherein
the notification is overlaid on the touch panel screen including details of the registered products.

9. The register system according to any one of claims 1 to 8, wherein
the notification is an audio notification.

10. The register system according to any one of claims 1 to 9, wherein
the operation key is included as a selectable object displayed on a touch panel screen.

11. The register system according to any one of claims 1 to 10, wherein
the operation key is included in a physical key panel.

12. A method for processing product registration, comprising:
magnetically or electronically reading user data from a medium carried by a user;
optically reading codes of products and registering the products as the codes are optically read;
as the products are being registered, determining whether or not a condition for completing product registration is satisfied using data about the products that have been registered and the user data; and
if the condition is not satisfied at any time prior to activation an the operation key to complete product registration, generating a notification about the condition not being satisfied.

13. The method according to claim 12, wherein
the notification is overlaid on the touch panel screen including details of the registered products.

14. The method according to claim 13, wherein
the notification is an audio notification.

15. The method according to claim 14, wherein
the user data is associated with an electronic payment source of the user and data about the products include prices of the products, and the notification is generated when funds available in the electronic payment source of the user is less than a total price of all the registered products.
